# EUROPÄISCHE PATENTANMELDUNG

(11) **EP 2 365 595 A1**
(43) Veröffentlichungstag der Anmeldung: **14.09.2011**
(21) Anmeldenummer: 10156069.6
(22) Anmeldetag: 10.03.2010
(51) Int. Cl.: H02G 3/04, F16L 3/26

(54) **Kabelrinne**

(71) Anmelder: Zurecon AG, 8003 Zürich (CH)
(72) Erfinder: Pfluger, Gerd, 4625, Oberbuchsiten (CH)
(74) Vertreter: Rutz & Partner

(57) **Zusammenfassung**

Die Kabelrinne (1), die der Aufnahme von zu installierenden Kabeln (5) dient, weist ein metallenes Bodenteil auf, welches an einer ersten und einer zweiten Seite, die einander gegenüberliegen, je mit einer metallenen Seitenwand (12) verbunden ist. Erfindungsgemäss sind die Seitenwände (12) einstückig gefertigt und mit einem Fussstück (121) sowie einem dazu geneigten Wandstück (122) versehen. Das Bodenteil besteht aus vereinzelten plattenförmigen Bodenelementen (11), die je an einer ersten und einer zweiten Seite durch formschlüssige Verbindungen (9) mit den Fussstücken (121) der Seitenwände (12) verbunden sind, wobei die Materialdicke der Seitenwände (12) grösser gewählt ist, als die Materialdicke der Bodenelemente (11).

## Beschreibung

Die Erfindung betrifft eine Kabelrinne nach dem Oberbegriff des Patentanspruchs 1.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität in Kabelrinnen gelegt und so z.B. von einem Schaltfeld oder einer Zentrale zu Verbrauchern geführt. Kabelrinnen dieser Art sind beispielsweise aus dem [1], Produktkatalog der LANZ OENSINGEN AG, Juni 2009, bekannt.

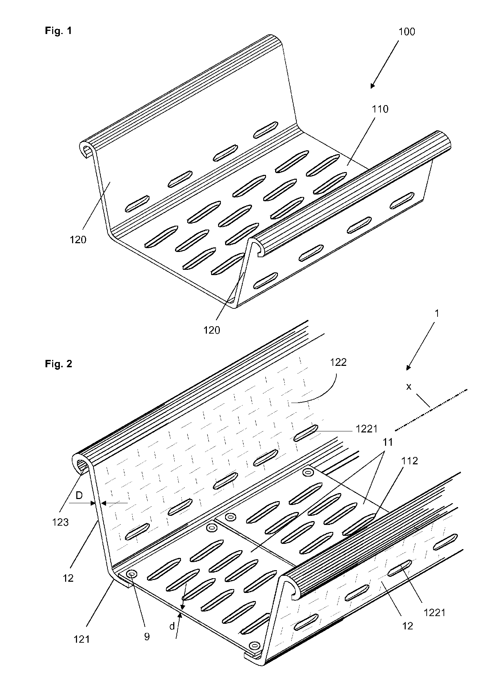

Die in [1], Seite 44 und nachstehend in Figur 1 gezeigten Kabelrinnen weisen zwei durch ein Bodenteil miteinander verbundene Seitenwände auf und sind in der Regel mit Längsschlitzen versehen, die der Luftkühlung der eingelegten Kabel dienen. Somit wird durch die Kabelrinnen ein auf drei Seiten geschlossener Kanal gebildet, welcher die eingelegten Kabel optimal schützt und gleichzeitig insbesondere von der Unterseite optisch abdeckt, so dass die installierten Kabel, die ungeordnet aufeinander liegen, von unten nicht sichtbar sind und ein optimaler ästhetischen Eindruck erzielt wird. Dabei ist jedoch zu beachten, dass die Längsschlitze der Kabelrinnen nach der Installation regelmässig mindestens zum Teil durch Kabel abgedeckt sind, weshalb eine wünschbare Kühlluftzufuhr zumeist nicht gewährleistet ist.

Weiter ist in [1] gezeigt, dass die Kabelrinnen entlang ihres Weges oft verschiedene Richtungsänderungen erfahren. Es wird daher vorgesehen, dass die Abschnitte der Kabelrinnen entsprechend miteinander koppelbar sind, so dass laterale oder vertikale Wegänderungen realisierbar sind. Dazu werden vom Hersteller entsprechend Kopplungselemente zur Verfügung gestellt, mittels derer Richtungsänderungen realisiert werden können. Die Planung der Kabelrinnenführung wird basierend auf der geplanten Infrastruktur eines Gebäudes sowie den individuellen Wünschen des Architekten festgelegt, welche insbesondere auch ästhetische Anforderungen berücksichtigen. Gestützt auf die erstellten Pläne werden in der Folge die Kabelrinnen und Kopplungsstücke in entsprechender Anzahl und mit den erforderlichen Abmessungen bestellt. Sofern bei der Planung Änderungen oder Fehler auftreten, so sind die bereitgestellten Kabelrinnen und Kopplungselemente gegebenenfalls nicht mehr passend und müssen ergänzt oder ausgetauscht werden. Wenn zum Beispiel neu eine Abzweigung vorzusehen ist, so sind entsprechend angepasste Abschnitte von Kabelrinnen erforderlich. Ein Klempner kann eine Kabelrinne auch bearbeiten, um eine entsprechende Änderung vorzusehen. Solche Spezialarbeiten sind jedoch sehr aufwändig und hinterlassen zumeist nicht denselben ästhetischen Eindruck, wie original hergestellte Bauteile. Der Installateur wird daher eher einen zeitlichen Verzug in Kauf nehmen und passende Kabelrinnen-Elemente nachbestellen und installieren. Während dieser Aufwand bei Neuinstallationen zumeist überschaubar ist, resultieren bei bestehenden Installationen, bei denen Änderungen vorzusehen sind, zumeist erhebliche Aufwendungen und zeitliche Verzögerungen.

Wie dies in [2], DE 20 2008009852 U1, beschrieben ist, müssen Kabelrinnen stabil und leicht montierbar sein. Um eine gewünschte Stabilität zu erzielen, wird daher relativ dickes Blech verwendet, welches der Kabelrinne an den kritischen Stellen die erforderliche Stabilität verleiht. Aufgrund dieses Sachverhalts erfordern gattungsgemässe Kabelrinnen einen entsprechend hohen Materialaufwand.

Als Rohmaterial zur Fertigung einer Kabelrinne wird vorzugsweise ein gelochtes Blech in entsprechender Materialdicke verwendet, welches anschliessend z.B. durch Tiefziehen bzw. Zugdruckumformen bearbeitet wird. Dabei ist zu beachten, dass bei diesem Verfahren, welches in der Norm DIN 8584 definiert ist, auch unerwünschte Verformungen des gelochten Blechs und somit Strukturänderungen auftreten. Die Möglichkeiten zur Ausgestaltung der Kabelrinnen sind daher beschränkt. Verschiedene Formen können zudem überhaupt nicht oder nur mit sehr hohem Aufwand realisiert werden. Gegebenenfalls muss die gefertigte Kabelrinne in einem weiteren Prozess mit entsprechendem Aufwand nachbearbeitet werden.

Ferner ist zu beachten, dass für die genannten Verfahren teure Werkzeuge erforderlich sind, welche über entsprechend hohe Stückzahlen der gefertigten Produkte zu amortisieren sind. Eine flexible Anpassung der gefertigten Kabelrinnen an die Bedürfnisse der Anwender ist daher nur schwer möglich.

Die Endstücke der in [2] gezeigten Kabelrinnen sind ferner derart ausgestaltet, dass sie entlang einer Achse ausgerichtet miteinander verbunden werden können. Eine Wegänderung ist dabei kaum realisierbar.

Der vorliegenden Erfindung liegt daher die Aufgabe zugrunde, eine verbesserte Kabelrinne zu schaffen.

Insbesondere ist eine Kabelrinne zu schaffen, die bei der Installation oder bei späteren Änderungen der Infrastruktur flexibel an die Bedürfnisse des Anwenders adaptierbar ist.

Insbesondere sollen Wegänderungen der Kabel während der Installation der Kabelrinnen und auch nach deren Installation mit geringem Aufwand realisierbar sein.

Die neue Kabelrinne soll ferner erlauben, Kabel schonend, geordnet und gut belüftet aufzunehmen.

Ferner soll die neue Kabelrinne mit reduziertem Fertigungsaufwand und reduziertem Materialaufwand hergestellt werden können.

Diese Aufgabe wird mit einer Kabelrinne gelöst, welche die in Anspruch 1 angegebenen Merkmale aufweist. Vorteilhafte Ausgestaltungen der Erfindung sind in weiteren Ansprüchen angegeben.

Die Kabelrinne, die der Aufnahme von zu installierenden Kabeln dient, weist ein metallenes Bodenteil auf, welches an einer ersten und einer zweiten Seite, die einander gegenüberliegen, je mit einer metallenen Seitenwand verbunden ist. Erfindungsgemäss sind die Seitenwände einstückig gefertigt und mit einem Fussstück sowie einem dazu geneigten Wandstück versehen. Das Bodenteil besteht aus vereinzelten plattenförmigen Bodenelementen, die je an einer ersten und einer dazu gegenüberliegenden zweiten Seite durch formschlüssige Verbindungen mit den Fussstücken der Seitenwände verbunden sind, wobei die Materialdicke der Seitenwände grösser gewählt ist, als die Materialdicke der Bodenelemente.

Mittels der Bodenelemente kann daher ein durchgehender oder durch Öffnungen oder Schlitze durchbrochener Boden für die Kabelrinne mit reduziertem Materialaufwand geschaffen werden. Diese Lösung weist vielfältige weitere Vorteile auf. Die einstückigen Seitenwände, die eine grössere Materialdicke aufweisen als die Bodenelemente, verleihen der Kabelrinne eine hohe Tragkraft und verhindern das Durchbiegen unter Last bzw. nach dem Einlegen der Kabel. Die beiden Seitenwände können dabei identisch ausgestaltet sein und daher mit reduziertem Aufwand hergestellt werden.

Die Bodenelemente dienen nicht nur dem Stützen und der optischen Abdeckung der eingelegten Kabel von unten. Vielmehr können die Bodenelemente mit minimalem Aufwand individuell bearbeitet und an die jeweiligen Bedürfnisse des Anwenders angepasst werden. Beispielsweise können vorzugsweise mit Anhalsungen versehene Öffnungen vorgesehen werden, durch die die Kabel aus der Kabelrinne geführt werden können. Ferner können geschwächte Materialzonen oder geschwächte Materiallinien, wie Perforationen vorgesehen werden, welche vom Handwerker bedarfsweise aufgebrochen werden können, um einen Durchlass für eines oder mehrere Kabel zu schaffen. Ferner kann eines der Bodenelemente auch mit relativ geringem Aufwand entfernt werden, um beispielsweise einen Kabelschacht an die Kabelrinne anzuschliessen.

In einer besonders bevorzugten Ausgestaltung ist vorgesehen, dass zwischen wenigstens einem von zwei benachbarten Bodenelementen und den Fussstücken der Seitenwände wenigstens ein Zwischenstück verschiebbar gehalten ist, welches die Bildung einer der Durchführung von Kabeln dienende Lücke zwischen den beiden benachbarten Bodenelementen wahlweise ermöglicht. Das verschiebbare Zwischenstück deckt im Normalfall die Lücke ab und wird im Bedarfsfall vorwärts oder rückwärts unter eines der Bodenelemente geschoben. Durch die freigelegte Lücke hindurch können in der Folge Kabel zu- oder weggeführt werden. Sollte bei Nachinstallationen der Kabelrinne ein Kabel neu zugeführt oder ein in der Kabelrinne verlegtes Kabel an einer bestimmten Stelle weggeführt werden, so kann der Handwerker die Kabelrinne innerhalb weniger Sekunden entsprechend anpassen und eine passende Lücke öffnen. In die Kabellücke wird allenfalls noch ein Kunststoffeinsatz eingefügt, welcher eine schonende Umlenkung der Kabel erlaubt. Mit der erfindungsgemässen Kabelrinne kann daher eine beliebige Infrastruktur mit geringem Aufwand erstellt und geändert werden. Änderungen der Kabelwege, die aufgrund von Planungsänderungen oder Neuinstallationen erforderlich sind, können rasch vollzogen werden. Da die Änderbarkeit der Kabelrinne systemimmanent ist, treten vollzogene Änderungen nicht störend in Erscheinung, sondern hinterlassen ebenfalls einen professionellen Eindruck.

Für die praktisch uneingeschränkte Möglichkeit zur Bearbeitung der Bodenelemente sind keine teuren Werkzeuge erforderlich, wie dies für das Tiefziehen einer Kabelrinne erforderlich wäre. Die Bodenelemente können mit einer einfachen Stanzmaschine seriell bearbeitet, insbesondere mit Verformungen und Öffnungen versehen werden. Anhand der Verformungen, die in die Kabelrinne hineinragen, können die Bodenelemente mit einer hohen Biegefestigkeit versehen werden. Dazu werden schmale Verformungen bzw. Sicken in die Bodenelemente eingearbeitet, welche nach der Verbindung der Bodenelemente mit den Seitenwänden vorzugsweise gerade von einer Seitenwand zur andern verlaufen und in die Kabelrinne mit einer Höhe von vorzugsweise 1-10mm hinein ragen. Durch diese Massnahme kann selbst bei sehr dünnen Bodenelementen eine hohe Biegefestigkeit erreicht werden, welche verhindert, dass die Bodenelemente sich nach dem Einlegen der Kabel durchbiegen.

Durch die Verformungen bzw. Sicken wird ferner verhindert, dass die eingelegten Kabel in den Bodenelementen vorgesehene Ventilationsöffnungen abdecken, wodurch die Belüftung und Entlüftung der eingelegten Kabel behindert würde.

In vorzugsweisen Ausgestaltungen werden ferner Einsenkungen in den Verformungen vorgesehen, die der geordneten Aufnahme eines Kabels dienen. Durch diese Massnahme werden die eingelegten Kabel nicht nur angehoben, sondern auch voneinander getrennt. Durch die Wahl entsprechender Abstände zwischen den Einsenkungen resultieren eine übersichtliche Installation sowie eine elektrische und thermische Entkopplung der einzelnen Kabel. Die Kabel werden daher nicht nur optimal gekühlt, sondern es wird auch die Gefahr störender Interferenzen reduziert.

Nebst der vorteilhaften Funktionalität der neuen Kabelrinne ist ferner der reduzierte Materialaufwand von besonderer Bedeutung. Durch die Wahl von Bodenplatten, deren Materialdicke um einen vorzugsweise im Bereich von 2-5 liegenden Faktor geringer ist als die Materialdicke der Seitenwände kann erheblich Material eingespart werden. Sofern die Materialdicke der Seitenwände 1,25 mm beträgt, so werden z.B. Bodenelemente in typischen Ausgestaltungen mit einer Materialdicke von 0,3-0,5 mm gewählt.

Die Verbindung der Fussstücke mit den darauf ruhenden Bodenelementen erfolgt vorzugsweise mittels Durchsetzfügen, bekannt auch als Toxen. Durchsetzfügen ist ein Verfahren zum Verbinden von Blechen ohne Verwendung eines Zusatzwerkstoffes. Man kann es sowohl zu den Fügeverfahren als auch zu den Umformverfahren rechnen, da die Verbindung durch Umformen des Werkstoffs erreicht wird. Eine Untergruppe des Fügens ist nach DIN 8593 das Fügen durch Umformen. Das Fügen ist wiederum aufgeteilt in Fügen durch Umformen drahtförmiger Körper, bei Blech-, Rohr- und Profilteilen und durch Nietverfahren. Nach DIN 8593 ist dem Fügen durch Umformen bei Blech-, Rohr und Profilteilen neben Quetschen und Verpressen unter anderem das Durchsetzfügen, auch Clinchen genannt, zugeordnet. Ein Vorteil des Clinchens ist, dass kein Vorlochvorgang durchgeführt wird (siehe [3], http://de.wikipedia.org/wiki/Durchsetzfügen).

Auch aufgrund der Vermeidung von Zusatzwerkstoffen können die erfindungsgemässen Kabelrinnen mit minimalem Aufwand gefertigt werden. Die relativ dünnen Bodenelemente können dabei besonders vorteilhaft bearbeitet werden.

Die formschlüssigen Verbindungen werden vorzugsweise in gleichen Abständen von beispielsweise 75mm vorgesehen. Die Bodenelemente können sich dabei überlappen oder können voneinander getrennt sein. Sofern die Länge eines Bodenelements im Bereich von 30 cm liegt, wird dieses daher vorzugsweise mit beidseits je vier formschlüssigen Verbindungen mit den Fussstücken der Seitenwände verbunden. Der gesamte Herstellungsvorgang kann daher mit hoher Kadenz und minimalem Aufwand durchgeführt werden.

An den beiden Enden der gefertigten Kabelrinne werden vorzugsweise Querstreben vorgesehen, welche es erlauben, benachbarte Kabelrinnen in einfacher Weise miteinander zu koppeln. Die Querstreben sind beispielsweise Profilstäbe, wie ein C-Profil, welche es erlauben, Verbindungselemente zu montieren. Querstreben können auch innerhalb der Kabelrinne vorgesehen werden. Beispielsweise wird zwischen zwei Bodenelementen eine Querstrebe vorgesehen, welche die Bodenelemente vorzugsweise überlappt und festklemmt. Ein derart gehaltenes Bodenelement kann durch Krafteinwirkung bedarfsweise wieder gelöst werden. Die Querstreben werden vorzugsweise ebenfalls anhand von Durchsetzfügen oder durch eine andere Verbindungstechnik, wie Nieten oder Schrauben, mit den Fussstücken der Seitenwände verbunden.

Nachfolgend wird die Erfindung anhand von Zeichnungen näher erläutert. Dabei zeigt:
- Fig. 1: eine bekannte einstückige Kabelrinne 100 mit zwei Seitenwänden 120, die an einander gegenüberliegenden Seiten eines Bodenteils 110 angeformt sind;
- Fig. 2: eine erfindungsgemässe Kabelrinne 1 mit zwei Seitenwänden 12, deren Fussstücke 121 durch vereinzelte plattenförmige Bodenelemente 11 miteinander verbunden sind;
- Fig. 3: die Kabelrinne 1 von Figur 2, mit Verbindungselementen 7, welche die Kopfstücke 123 der Seitenwände 12 miteinander verbinden;
- Fig. 4: die Kabelrinne 1 von Figur 2 mit Bodenelementen 11, die mit Ventilationsöffnungen 112 und mit schmalen Verformungen bzw. Sicken 111 versehen sind, die gerade von einem zum anderen Fussstück 121 verlaufen;
- Fig. 5: die Kabelrinne 1 von Figur 4 mit Querstreben 14 an beiden Enden und zwischen den Bodenelementen 11;

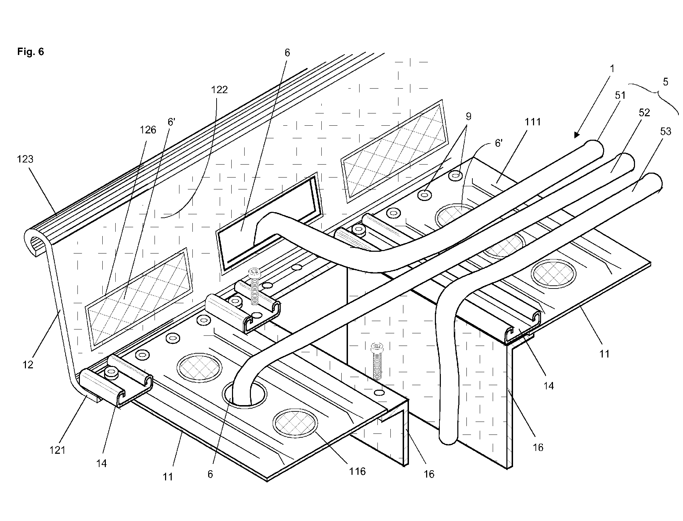

- Fig. 6: eine vorzugsweise Ausgestaltung der Kabelrinne 1 von Figur 5 mit Seitenwänden 12 und Bodenelementen 11, die mit Durchtrittsöffnungen 6 versehen sind, die kann entsprechend vorbereiteten Zonen vom Installateur geöffnet wurden;
- Fig. 7: die Kabelrinne 1 von Figur 4 mit zwei Bodenelementen 11, deren Verformungen 111 mit Einsenkungen 1111 und mit Lochungen 1112 für Niederhaltebügel 1113 versehen sind und zwischen denen mehrere verschiebbar gehaltene Zwischenstücke 118 vorgesehen sind;
- Fig. 7a: die Seitenwand 12 der Kabelrinne 1 von Figur 7 in einer vorzugsweisen Ausgestaltung, bei der das Zwischenstück 118 von einem verjüngten Endstück 1211 des Fussstücks 121 verschiebbar gehalten ist; und
- Fig. 8: die Kabelrinne von Figur 7 mit den gegen die Bodenelemente 11 verschobenen Zwischenstücken 118, die frontseitig kabelschonend abgerundet sind.

Figur 1 zeigt eine bekannte einstückige Kabelrinne 100 mit zwei Seitenwänden 120, die an einander gegenüberliegenden Seiten eines Bodenteils 110 angeformt sind. Die Seitenwände 120 und das Bodenteil 110 weisen unabhängig von auftretenden Belastungen über den gesamten Bereich zumindest annähernd dieselbe Materialdicke auf. Die Seitenwände 120 und das Bodenteil 110 weisen Öffnungen für verschiedene Funktionen auf.

Figur 2 zeigt eine erfindungsgemässe Kabelrinne 1 mit zwei Seitenwänden 12, deren Fussstücke 121 durch vereinzelte plattenförmige Bodenelemente 11 miteinander verbunden sind. Die beiden identisch ausgestalteten und mit Öffnungen 1221 versehenen Seitenwände 12 weisen ein Fussstück 121 und ein dazu geneigtes Wandstück 122 auf, an dessen Oberseite ein nach aussen gerolltes Kopfstück 123 vorgesehen ist. Die Bodenelemente 11 sind beidseitig mittels Durchsetzfügen, z.B. Tox-Verbindungen 9, mit den Fussstücken 121 formschlüssig verbunden.

Die Materialdicke D der nach der Installation statisch stark belasteten Seitenwände 12 ist mehrfach grösser als die Materialdicke d der Bodenelemente 11, die einer reduzierten Belastung ausgesetzt sind. Die gewählten Materialdicken sind daher optimal an die auftretenden Lasten angepasst, weshalb ein Minimum an Material eingesetzt wird.

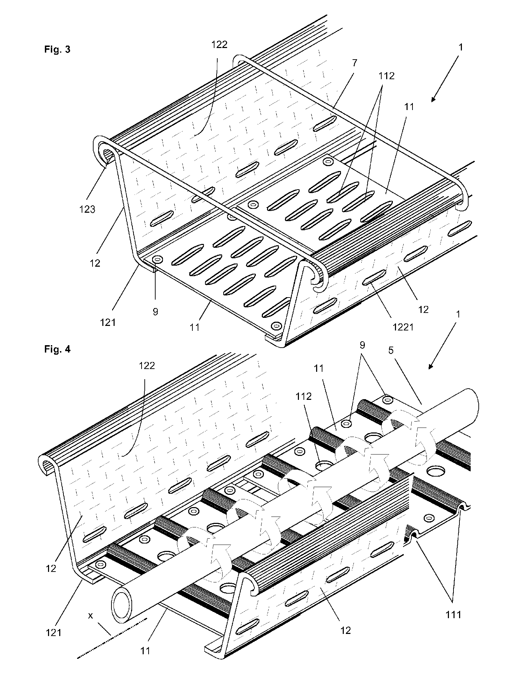

Figur 3 zeigt die Kabelrinne 1 von Figur 2, mit Verbindungselementen 7, welche die Kopfstücke 123 der Seitenwände 12 miteinander verbinden. Auf diese Weise kann die Kabelrinne 1 mit geringem Aufwand stabilisiert werden. Ferner verhindern die eingesetzten Verbindungselemente 7, dass eingelegte Kabel aus der Kabelrinne 1 austreten können.

Figur 4 zeigt die Kabelrinne 1 von Figur 2 mit Bodenelementen 11, die mit Ventilationsöffnungen 112 und schmalen Verformungen bzw. Sicken 111 versehen sind. Die Sicken 111 verlaufen senkrecht zur Hauptachse x der Kabelrinne 1 von einem zum anderen Fussstück 121. Auf diese Weise erhalten die Bodenelemente 11 eine hohe Biegesteifigkeit, welche verhindert, dass sich die Bodenelemente 11 unter der Last der Kabel 5 durchbiegen können. Zu beachten ist, dass die Bodenelemente 11, die beidseits von den Fussstücken 121 der Seitenwände 12 gehalten sind, jeweils nur eine Teillast der Kabel 5 aufnehmen müssen.

Die Sicken 111 verlaufen quer zu den in die Kabelrinne 1 eingelegten Kabel 5, weshalb die Kabel 5 auf den Sicken 111 aufliegen und somit praktisch schwebend gelagert sind. Dadurch wird verhindert, dass die in den Bodenelementen 11 vorgesehenen Ventilationsöffnungen 112 durch Kabel 5 zugedeckt werden. Die Ventilationsöffnungen 112 bleiben daher frei und ermöglichen die Belüftung der eingelegten Kabel 5. Das Kabel 5 wird dabei praktisch über den gesamten Umfang und die gesamte Länge von Luft umströmt und gekühlt. Die Höhe der Sicken 111 wird dabei derart gewählt, dass eine erwünschte Biegefestigkeit sowie eine erwünschte Anhebung der Kabel 5 erzielt werden.

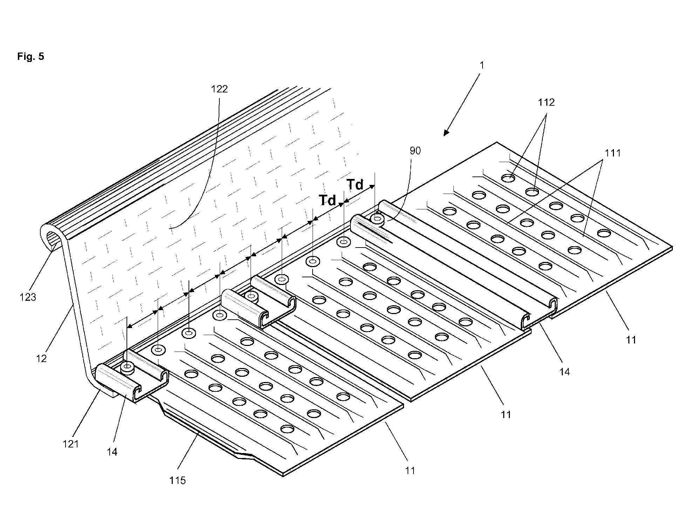

Figur 5 zeigt die Kabelrinne 1 von Figur 4 mit Querstreben 14 an beiden Enden und zwischen den Bodenelementen 11. Durch die Querstreben 14 werden die beiden Enden der Kabelrinne 1 verstärkt und es werden massive Kopplungspunkte geschaffen, welche es erlauben, zwei benachbarte Kabelrinnen 1 in einfacher Weise miteinander zu verbinden. Auch zwischen den einzelnen Bodenelementen 11 sind Querstreben 14 vorgesehen, welche nach der Entfernung einer Bodenplatte 11 wiederum als Kopplungspunkte z.B. für einen Anschlusskanal oder einen Schacht dienen können. Weiterhin kann mittels der Querstreben eine zusätzliche Stabilisierung der Kabelrinne 1 erzielt werden. Wie dies in dieser vorzugsweisen Ausgestaltung gezeigt ist, überlappen die Querstreben 14 die Enden der zugehörigen Bodenelemente 11, weshalb die Bodenelemente 11 fixiert werden und die Anzahl der Tox-Verbindungen 9 reduziert werden kann. Die Querstreben 14 werden ebenfalls durch Durchsetzfüge-Verbindungen 9 oder durch weitere Verbindungselemente 90, wie Schrauben oder Nieten, mit den Fussstücken 121 der Seitenwände 12 verbunden. Es ist gezeigt, dass die Durchsetzfüge-Verbindungen 9 in gleichem Abstand vorgesehen werden können, so dass ein vereinfachter Fertigungsprozess resultiert.

Da die Seitenwände 12 und die Bodenelemente 11 vereinzelt gefertigt werden, können sie mit einem einfachen Werkzeug, zum Beispiel einem Stanzwerkzeug, beliebig bearbeitet und geformt werden. Dabei können nicht nur Sicken 111 eingeprägt, sondern auch Materialverdünnungen und Perforationen 116, 126 eingearbeitet werden, welche durch den Handwerker mit einfachen Massnahmen aufgebrochen werden können. Bei der Installation oder bei einer späteren Änderung der Infrastruktur können daher Öffnungen 6 aufgebrochen werden, um einzelne Kabel 51, 52, 53 bedarfsweise zuzuführen oder wegzuführen. Alternativ können die Seitenwände 12 auch mit verschliessbaren Fenstern 126 versehen sein. Ferner kann ein gesamtes Bodenelement 11 gelöst und entfernt werden, um z.B. einen Schacht 16 anzuschliessen, oder um leuchten und Apparate einzusetzen.

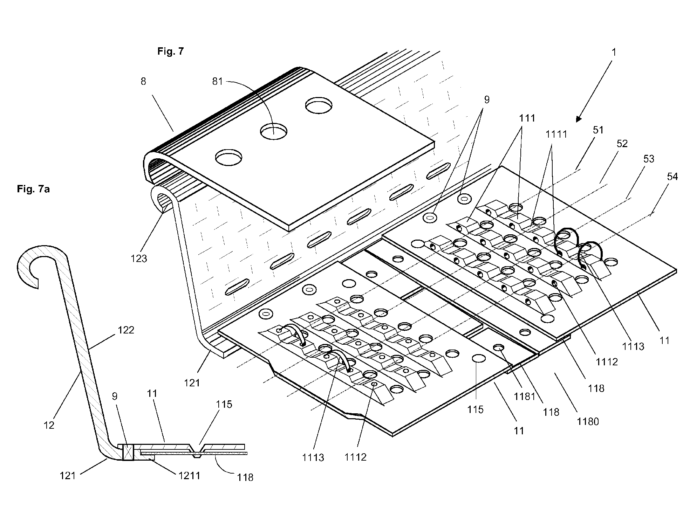

Es ist gezeigt, dass die Seitenwände 12 und die Bodenelemente 11 mehrere potentielle Durchtrittsöffnungen 6' aufweisen, von denen zwei aufgebrochen sind. Ein erstes Kabel 51 wird durch die in der Seitenwand 12 vorgesehene Durchtrittsöffnung 6 und ein zweites Kabel 52 wird durch die in einem Bodenelement 11 vorgesehene Durchtrittsöffnung 6 weggeführt. Ein drittes Kabel 53 wird hingegen durch einen Kabelschacht 16, der z.B. mittels Schrauben mit den zugehörigen Querstreben 14 verbunden wird, nach unten geführt. Eine installierte erfindungsgemässe Kabelrinne 1 kann daher zu einem beliebigen Zeitpunkt mit minimalem Aufwand flexibel an Änderungen der Infrastruktur angepasst werden. Kabel 5 können daher praktisch an jedem Punkt zu- oder weggeführt werden. Die Bodenelemente 11 können trotz deren Stabilität, die durch die eingeformten Sicken 111 bewirkt wird, problemlos bearbeitet werden, um Durchtrittsöffnungen 6, die auch peripher angeordnet und nach aussen offen sein können, vorzusehen. Aufgrund der geringen Materialdicke können die dazu vorbereiteten Bodenelemente 11 vom Handwerker mit seinen üblichen Werkzeugen problemlos bearbeitet werden. Während bei konventionellen Vorrichtungen unter Umständen eine gesamte Kabelrinne ersetzt oder mit schwerem Werkzeug bearbeitet werden muss, kann eine erfindungsgemässe Kabelrinne 1 routinemässig und mit minimalem Aufwand an die Bedürfnisse des Anwenders angepasst werden. Figur 7 zeigt die Kabelrinne von Figur 4 mit zwei Bodenelementen 11, deren Verformungen bzw. Sicken 111 mit Einsenkungen 1111 versehen sind, in die Kabel 51, 52, 53, 54 geordnet und voneinander getrennt eingelegt werden können. Diese Sicken 111 weisen eine Art Rasterung auf, welche eine automatische Ordnung und Auftrennung der eingelegten Kabel 51, 52, 53, 54 bewirkt.

Ferner sind die Sicken 111 oben oder seitlich mit Öffnungen 1112 versehenen, in die Montageelemente 1113, wie Niederhaltebügel oder Befestigungsschlaufen, einführbar sind.

Ferner sind in Figur 7 zwischen den Bodenelementen 11 und den Fussstücken 121 der Seitenwände 12 zwei plattenförmige Zwischenstücke 118 vorgesehen. Durch die Zwischenstücke 118, die von den Bodenelementen 11 verschiebbar gehalten sind, wird eine Lücke 1180 zwischen den beiden voneinander beabstandeten Bodenelementen 11 verschlossen. Die Bodenelemente 11 und die Zwischenstücke 118 bilden daher einen praktisch durchgehenden Boden, welcher den Einblick in die Kabelrinne 1 verwehrt.

Figur 7a zeigt eine vorzugsweise Ausgestaltung der Seitenwand 12, deren Fussstück 121 ein verjüngtes Endstück 1211 aufweist, auf dem die Zwischenstücke 118 verschiebbar gelagert werden. Ferner ist gezeigt, dass das anhand einer Tox-Verbindung 9 mit dem Fussstück 121 verbundene Bodenelement 11 mit wenigstens einem nach unten ragenden Nocken 115 versehen ist, mittels dessen das Zwischenstück 118 in Position gehalten wird. Durch anheben des Bodenelements 11 bzw. der Nocken 115 wird das Zwischenstück 118 freigegeben und kann verschoben werden. Dabei werden im Zwischenstück 118 vorzugsweise Öffnungen 1181 vorgesehen, in die die Nocken 115 eingreifen können, um das Zwischenstück 118 in der jeweiligen Position zu halten. Die Zwischenstücke 118 können daher mit einem Handgriff von einer ersten zu einer zweiten oder weiteren definierten Position verschoben werden. Wie dies in Figur 7 gezeigt ist, werden die Seiten der Zwischenstücke 118, über die die Kabel 5 geführt werden, vorzugsweise abgerundet, damit die Kabel 5 auch in Biegezonen schonend gelagert und keinen scharfen Kanten ausgesetzt sind.

In Figur 7 ist ferner gezeigt, dass die Kabelrinne 1 mit einem vorzugsweise vorgesehenen Deckel 8 abschliessbar ist, der Ventilationsöffnungen 81 aufweist. Auf diese Weise werden die Kabel 5 von allen Seiten geschützt. Typischerweise wird ein Deckel 8 vorgesehen, wenn die Kabelrinne 1 nicht an der Decke montiert ist und die installierten Kabel 5 daher sichtbar sind.

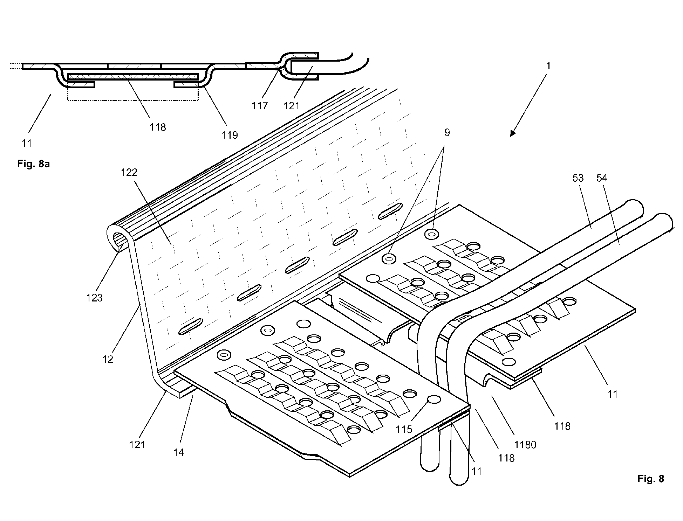

Figur 8 zeigt die Kabelrinne 1 von Figur 7, nachdem zwei Teile der Zwischenstücke 118 gegen das zugehörige Bodenelement 11 verschoben und die Lücke 1180 halb geöffnet wurde, um die eingelegten Kabel 53, 54 nach unten wegzuführen. Bei dieser Ausgestaltung der Kabelrinne 1 ist es nicht notwendig, ein Element aus der Seitenwand 12 oder der Bodenplatte 11 auszubrechen oder ein Bodenelement 11 gesamthaft zu entfernen, um eine Durchtrittsöffnung zu schaffen. Bei dieser Ausgestaltung kann der Handwerker die gewünschte Durchtrittsöffnung mittels eines Handgriffs realisieren. Alternativ kann auch nur ein Zwischenstück vorgesehen sein, wodurch die Fertigung und die Handhabung noch einfacher sind. Insbesondere muss nur auf einer Seite eines Bodenelements 11 ein entsprechender Raum zur Aufnahme des Zwischenstücks 118 vorgesehen werden.

Ein weiterer Vorteil der erfindungsgemässen Lösung ist, dass die Zwischenstücke 118 auch direkt an den Bodenelementen 11 befestigt werden können, wie dies in Figur 8a gezeigt ist. Aus den Bodenelementen 11 können Laschen 119 ausgeschnitten oder nach unten gebogen werden, in die Zwischenstücke 118 eingeschoben werden. Die Zwischenstücke 118 werden vorzugsweise wiederum durch Nocken 115 in einer gewählten Position gehalten, wie dies in Figur 7a gezeigt ist.

Die erfindungsgemässe Lösung erlaubt die Realisierung von vielseitig einsetzbaren Kabelrinnen 1, die an wechselnde Bedürfnisse der Anwender anpassbar sind. Die Bodenelemente 11 können mit minimalem Aufwand bearbeitet und mit Elementen versehen werden, welche der Erhöhung der Festigkeit der Bodenelemente 11 oder der Durchführung von Kabeln 5 dienen. Dabei können z.B. wahlweise verschließbare Fenster oder Klappen oder aufbrechbare Schnittlinien vorgesehen werden. weiterhin können Kopplungselemente vorzugsweise aus Kunststoff vorgesehen werden, welche mit den Bodenelementen 11 koppelbar sind und eine schonende Kabelführung gewährleisten.

Die Befestigung der Bodenplatten 11 kann mit den genannten Montageelementen, vorzugsweise durch Toxen, oder auch mit anderen Mitteln erfolgen. Sofern Querstreben 14 vorgesehen sind, welche die beiden Seitenwände 12 miteinander verbinden, so können die in Fussstücken 121 zugewandten Seiten der Bodenelemente 11 gabelförmig ausgestaltet sein, so dass sie formschlüssig mit den Fussstücken 121 verbindbar sind. Die z.B. gabelförmigen Endstücke 117, die auf die Fussstücke 121 aufgesetzt werden, sind in Figur 8a gezeigt.

## Patentansprüche

1. Kabelrinne (1) vorzugsweise aus Metall für die Aufnahme von zu installierenden Kabeln (5) mit einem Bodenteil, welches an einer ersten und einer zweiten Seite, die einander gegenüberliegen, je mit einer Seitenwand (12) verbunden ist, **dadurch gekennzeichnet, dass** die Seitenwände (12) einstückig gefertigt sind und ein Fussstück (121) sowie ein dazu geneigtes Wandstück (122) aufweisen und dass das Bodenteil aus vereinzelten plattenförmigen Bodenelementen (11) besteht, die je an einer ersten und einer zweiten Seite durch formschlüssige Verbindungen (9) mit den Fussstücken (121) der Seitenwände (12) verbunden sind, wobei die Materialdicke der Seitenwände (12) grösser gewählt ist, als die Materialdicke der Bodenelemente (11).

2. Kabelrinne (10) nach Anspruch 1, **dadurch gekennzeichnet, dass** Bodenelemente (11) auf den Fussstücken (121) der Seitenwände (12) ruhen und die durch Durchsetzfügen realisierten formschlüssigen Verbindungen (9) vorzugsweise in gleichen Abständen entlang den Fussstücken (121) der Seitenwände (12) angeordnet sind.

3. Kabelrinne (10) nach einem der Ansprüche 1 bis 2, **dadurch gekennzeichnet, dass** das Verhältnis der Materialdicken der Seitenwände (12) der Bodenelemente (11) in einem Bereich von 2:1 bis 10:1 liegt.

4. Kabelrinne (10) nach Anspruch 1, 2 oder 3, **dadurch gekennzeichnet, dass** die Bodenelemente (11) und/oder die Wandstücke (122) der Seitenwände (12) mit Öffnungen (112; 1221) versehen sind.

5. Kabelrinne (10) nach einem der Ansprüche 1 - 4, **dadurch gekennzeichnet, dass** die Bodenelemente (11) einander überlappen oder voneinander getrennt sind.

6. Kabelrinne (10) nach einem der Ansprüche 1 - 5, **dadurch gekennzeichnet, dass** zwischen wenigstens zwei der Bodenelemente (11) und/oder an den beiden Enden der Kabelrinne (10) Querstreben (14) vorgesehen und mit dem Fussstücken (121) der Seitenwände (12) verbunden sind.

7. Kabelrinne (10) nach Anspruch 6, **dadurch gekennzeichnet, dass** die vorzugsweise mit formschlüssigen Verbindungen (9), insbesondere Durchsetzfüge-Verbindungen, mit den Fussstücken (121) verbundenen Querstreben (14) die Bodenelemente (11) überlappen und festklemmen.

8. Kabelrinne (10) nach einem der Ansprüche 1 bis 9, **dadurch gekennzeichnet, dass** die Bodenelemente (11) quer oder senkrecht zur Hauptachse (x) der Kabelrinne (10) verlaufende, in den Innenraum der Kabelrinne (10) hinein ragende, vorzugsweise schmale linear verlaufende Verformungen (111), wie Sicken, aufweisen.

9. Kabelrinne (10) nach Anspruch 8, **dadurch gekennzeichnet, dass** die Verformungen (111) vorzugsweise gerade von dem Fussstück (121) der einen Seitenwand (12) zum Fussstück (121) der anderen Seitenwand (12) verlaufen.

10. Kabelrinne (10) nach Anspruch 8 oder 9, **dadurch gekennzeichnet, dass** die Verformungen (111) mit einer gleichmässigen Höhe in einem Bereich von 1 - 15 Millimeter in die Kabelrinne (10) hinein ragen oder dass die Verformungen (111) mit einer ungleichmässigen Höhe in einem Bereich von 1 - 15 Millimeter in die Kabelrinne (10) hinein ragen und vorzugsweise regelmässig beanstandete Einsenkungen (1111) aufweisen, die der Aufnahme und Ordnungstrennung einzelner Kabel (5) dienen.

11. Kabelrinne (10) nach einem der Ansprüche 1 bis 10, **dadurch gekennzeichnet, dass** die Bodenelemente (11) und/oder die Seitenwände (12) geschwächte Zonen oder Linien aufweisen, die potentielle Durchtrittsöffnungen begrenzen.

12. Kabelrinne (10) nach einem der Ansprüche 1 bis 11, **dadurch gekennzeichnet, dass** zwischen zwei benachbarten Bodenelementen (11) wenigstens ein Zwischenstück (118) bewegbar, vorzugsweise verschiebbar gehalten ist, welches eine der Durchführung von Kabeln (5) dienende Lücke (1180) zwischen den beiden benachbarten Bodenelementen (11) oder je einen Teil davon abdeckt, wobei das wenigstens eine Zwischenstück (118) zwischen den Fussstücken (121) der Seitenwände (12) und dem zugehörigen Bodenelement (11) oder an Montageelementen (119) gehalten ist, die am zugehörigen Bodenelement (11) vorgesehen sind.

13. Kabelrinne (10) nach einem der Ansprüche 8 bis 12, **dadurch gekennzeichnet, dass** die Bodenelemente (11) oder die darin vorgesehenen Verformungen (111) Öffnungen (1112) aufweisen, in die Montageelemente (1113), wie Bügel aus Metall oder Kunststoff, eingesetzt sind.

14. Kabelrinne (10) nach einem der Ansprüche 1 bis 13, **dadurch gekennzeichnet, dass** die Seitenwände (12) mit lösbaren Verschlüssen oder Fenstern versehen sind.

15. Kabelrinne (10) nach einem der Ansprüche 1 bis 14, **dadurch gekennzeichnet, dass** auf die Seitenwände (12) ein Deckel (8) aufgesetzt ist, der mit Lüftungsöffnungen (81) versehen ist.
